# EUROPÄISCHE PATENTSCHRIFT

(11) **EP 0 931 690 B1**
(45) Veröffentlichungstag und Bekanntmachung des Hinweises auf die Patenterteilung: **17.07.2002**
(21) Anmeldenummer: 98118682.8
(22) Anmeldetag: 02.10.1998
(51) Int. Cl.: B60N 2/20, B60N 2/48

(54) **Verstellvorrichtung für eine Kopfstütze**
Adjusting device for a headrest
Dispositif de réglage d'un appuie-tête

(30) Priorität: 21.01.1998 DE 19802028
(43) Veröffentlichungstag der Anmeldung: 28.07.1999
(73) Patentinhaber: Faurecia Autositze GmbH & Co. KG, 31655 Stadthagen (DE)
(72) Erfinder: Haferkamp, Michael, 30169 Hannover (DE); Mühlen, Dietmar, 31688 Nienstädt (DE)
(74) Vertreter: Thielking, Bodo, Dipl.-Ing.

(56) Entgegenhaltungen:
- DE-A- 19 603 911
- DE-C- 3 512 648
- GB-A- 2 057 255

## Beschreibung

Die Erfindung betrifft eine Verstellvorrichtung für an einer klappbaren Rückenlehne eines Kraftfahrzeugsitzes angeordnete Kopfstütze nach dem Oberbegriff des Anspruchs 1.

Aus DE 35 12 648 C1 ist eine Verstellvorrichtung bekannt, die zur Vermeidung von Kollisionen mit dem Kraftfahrzeugdach die Kopfstütze beim Vorklappen der Rückenlehne durch einen Motor in eine abgesenkte Lage verfährt und nach Rückkehr der Rückenlehne in Sitzposition die Kopfstütze wieder auf die Gebrauchslage anhebt. Der Motor, der in der Rückenlehne untergebracht ist, wird durch einen Schalter gesteuert, der von der Rückenlehne betätigt wird. Da die Leistung des Motors durch den vorhandenen Raum und die vorgegebene Stromversorgung begrenzt ist, erfolgt die Kopfstützenverstellung mit geringer Geschwindigkeit. Außerdem wird die Kopfstütze erst nach unten verfahren, wenn die Klappbewegung der Rückenlehne bereits begonnen hat. Bei einer schnellen Vorklappbewegung kann es deshalb trotz der Abwärtsbewegung der Kopfstütze zu einer Kollision mit dem Fahrzeugdach kommen.

Ausgehend von dem bekannten Stand der Technik liegt der Erfindung die Aufgabe zugrunde, eine motorische Kopfstützenhöhenverstellung so auszubilden, daß die Kopfstütze auch beim schnellen Vorklappen der Rückenlehne nicht mit dem Fahrzeugdach kollidiert.

Diese Aufgabe wird durch die Merkmale des Anspruchs 1 gelöst.

Durch die beim Anheben der Kopfstütze durch den Motor vorgespannte Feder wird die Kopfstütze sehr schnell abgesenkt. Die Absenkbewegung wird zudem bereits durch die Betätigung der Entriegelungsvorrichtung der Lehnenklappeinrichtung ausgelöst. Wenn die Feder mittig an einem die Führungsstangen der Kopfstütze miteinander verbindenden horizontalen Querstück angreift, ist eine verkantungsfreie Führung der Führungsstangen in den Führungsbuchsen gewährleistet.

Die Erfindung wird anhand der nachstehenden Zeichnungen näher erläutert. Es zeigen:
- Figur 1 -: eine Rückenlehne mit angehobener Kopfstütze,
- Figur 2 -: die Rückenlehne nach Fig. 1 mit abgesenkter Kopfstütze.

An einer Rückenlehne 2 ist eine Kopfstütze 1 höhenverstellbar gehalten. Die Kopfstütze 1 weist zwei Führungsstangen 1a, 1b auf, die in Führungsbuchsen 2a, 2b geführt werden, die am oberen Lehnenquerholm 2c angeordnet sind. An ihren in der Rückenlehne 2 liegenden Enden sind die Führungsstangen 1a, 1b durch ein Querstück 3 miteinander verbunden. Das Querstück 3 trägt eine Federaufhängung 3a, in die eine Zugfeder 4 eingehängt ist. Die Feder 4 ist unten in ein Widerlager 2e eingehängt, das am unteren Lehnenquerholm 2d befestigt ist.

Das Querstück 3 ist außerdem mit einer Zahnstange 8 verbunden, in die ein Antriebsritzel 7 eines rückenlehnenfesten Verstellmotors 5 eingreift. Zwischen Antriebsritzel 7 und Verstellmotor 5 ist eine mechanische Kupplung 6 angeordnet, die von einem Kupplungshebel 6a betätigt wird. Der Kupplungshebel 6a ist über einen Seilzug 10 mit dem einen Hebelarm 9c eines Winkelhebels 9 der Entriegelungsvorrichtung für die Lehnenklappvorrichtung verbunden. Die Entriegelungsvorrichtung wird durch einen Seilzug 11 betätigt, der an dem zweiten Hebelarm 9b des Winkelhebels 9 befestigt ist. Der Winkelhebel 9 ist um eine in Fahrtrichtung weisende horizontale Achse 9a schwenkbar gelagert.

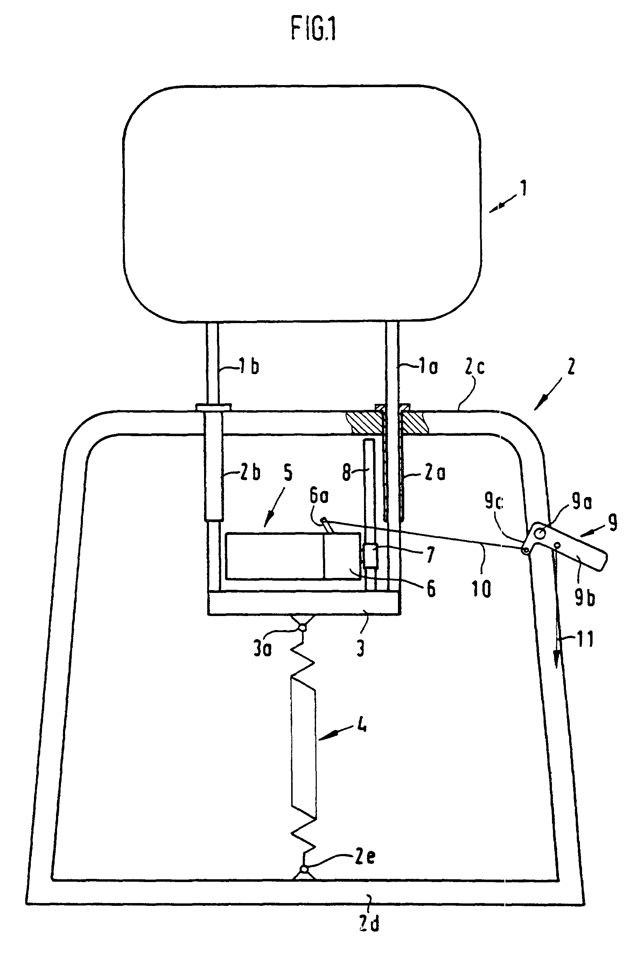

In Fig. 1 befindet sich die Kopfstütze 1 in ihrer ausgefahrenen Gebrauchslage. Die Kupplung 6a verbindet den Verstellmotor 5 mit dem Antriebsritzel 7. Das Antriebsritzel 7 greift in die Verzahnung am unteren Ende der Zahnstange 8 ein. Die Feder 4 ist gespannt.

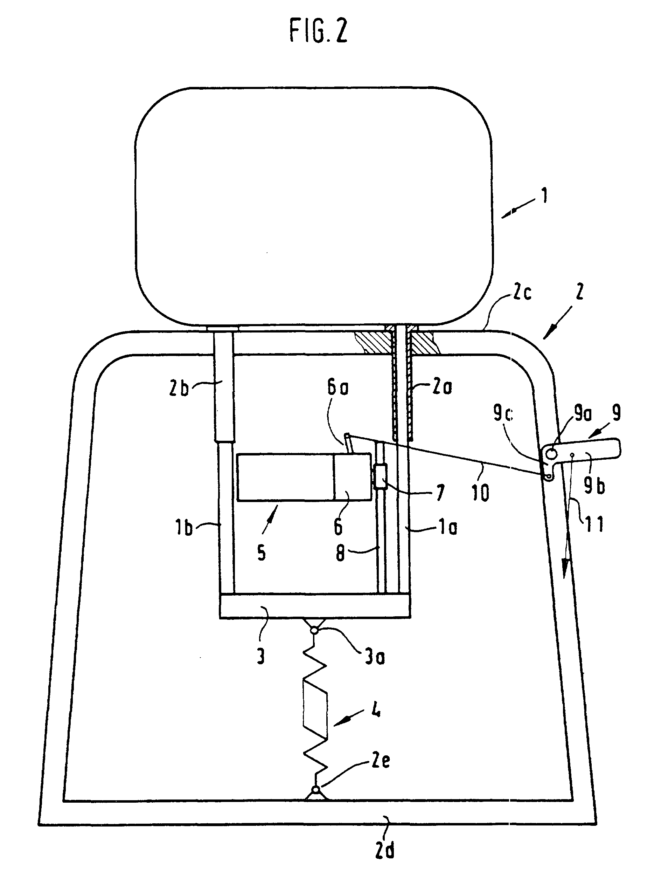

Fig. 2 zeigt den Winkelhebel 9 in Entriegelungsstellung. Über den Seilzug 11 ist die Rückenlehne 2 entriegelt und zum Vorklappen bereit. Die Kupplung 6 ist über den Kupplungshebel 6a vom Seilzug 10 betätigt worden und hat den Verstellmotor 5 vom Antriebsritzel 7 getrennt, so daß die Feder 4 die Kopfstütze 1 bis in die Nähe des oberen Lehnenquerholms 2c nach unten gezogen hat.

Nach dem Zurückklappen in die Ausgangslage wird die Kupplung 6 wieder geschlossen, so daß der Verstellmotor 5 die Kopfstütze über das Antriebsritzel 7 und die Zahnstange 8 wieder nach oben verfahren kann. Wenn eine Memory-Vorrichtung vorgesehen ist, verfährt der Verstellmotor 5 die Kopfstütze in seine vor dem Vorklappvorgang eingestellte Ausgangsstellung zurück.

## Patentansprüche

1. Verstellvorrichtung für eine Kopfstütze (1), die an einer klappbaren Rückenlehne (2) eines Kraftfahrzeugsitzes angeordnet ist, und deren Höhe mittels eines rückenlehnenfesten Verstellmotors (5) einstellbar ist, wobei der Verstellmotor seine Drehbewegung auf ein kopfstützenfestes Antriebselement überträgt, mit einer Entriegelungsvorrichtung für eine Lehnenklappvorrichtung der klappbaren Rükkenlehne,
**dadurch gekennzeichnet,**
**daß** der Verstellmotor (5) mittels der Entriegelungsvorrichtung für die Lehnenklappvorrichtung vom Antriebselement abkoppelbar ist und die Kopfstütze unter Vorspannung einer Feder (4) steht, welche diese nach Entriegelung der Lehnenklappvorrichtung nach unten zieht.

2. Verstellvorrichtung nach Anspruch 1,
**dadurch gekennzeichnet,**
**daß** der Verstellmotor (5) ein Antriebsritzel (7) aufweist, das mit einer kopfstützenfesten Zahnstange (8) kämmt.

3. Verstellvorrichtung nach Anspruch 1 oder 2,
**dadurch gekennzeichnet,**
**daß** die Kopfstütze (1) zwei parallel zueinander verlaufende Führungsstangen (1a; 1b) aufweist, die in rückenlehnenfesten Führungsbuchsen (2a; 2b) gelagert sind, wobei die Führungsstangen über ein Querstück (3) miteinander verbunden sind, an dem die Zahnstange (8) parallel zu den Führungsstangen angeordnet ist und die Feder (4) angreift.

4. Verstellvorrichtung nach einem oder mehreren der Ansprüche 1 bis 3,
**dadurch gekennzeichnet,**
**daß** die Feder (4) eine Zugfeder ist.

5. Verstellvorrichtung nach einem oder mehreren der Ansprüche 1 bis 4,
**dadurch gekennzeichnet,**
**daß** zwischen Antriebsritzel und Verstellmotor eine einbzw. ausrückbare mechanische Kupplung (6) angeordnet ist.

6. Verstellvorrichtung nach einem oder mehreren der Ansprüche 1 bis 5,
**dadurch gekennzeichnet,**
**daß** die Entriegelungsvorrichtung für die Lehnenklappvorrichtung ein schwenkbarer Hebel (9) ist, an dem zwei Seilzüge (10; 11) angreifen, deren einer (10) an der mechanischen Kupplung und deren anderer (11) an der Lehnenklappvorrichtung angreift.

7. Verstellvorrichtung nach einem oder mehreren der Ansprüche 1 bis 6,
**dadurch gekennzeichnet,**
**daß** eine Memory-Vorrichtung vorgesehen ist, die eine Rückkehr der Kopfstütze (1) in ihre vor dem Vorklappen angenommene Ausgangsstellung sicherstellt.

## Claims

1. Adjusting device for a head restraint (1) which is mounted on a folding backrest (2) of a motor vehicle seat, and whose height is adjustable by means of an adjustment motor (5) fixed on the backrest, wherein the adjustment motor transfers its rotary movement to a drive element fixed on the head restraint, with an unlocking device for a backrest folding device of the folding backrest, **characterised in that** the adjusting motor (5) can be uncoupled from the drive element by means of the unlocking device for the backrest folding device and the head restraint is pretensioned by a spring which draws the head restraint down after the backrest folding device has been unlocked.

2. Adjusting device according to claim 1 **characterised in that** the adjusting motor (5) has a drive pinion (7) which meshes with a toothed rack (8) fixed an the head restraint.

3. Adjusting device according to claim 1 or 2 **characterised in that** the head restraint (1) has two parallel aligned guide rods (1a, 1b) which are mounted in guide sockets (2a, 2b) fixed on the backrest whereby the guide rods are connected together through a cross member (3) on which the toothed rack (8) is mounted parallel to the guide rods and which engages on the spring (4).

4. Adjusting device according to one or more of claims 1 to 3 **characterised in that** the spring (4) is a tension spring.

5. Adjusting device according to one or more of claims 1 to 4 **characterised in that** a mechanical coupling (6) which can be engaged and released is mounted between the drive pinion and adjustment motor.

6. Adjusting device according to one or more of claims 1 to 5 **characterised in that** the unlocking device for the backrest folding device is a swivel lever (9) on which two cable pulleys (10, 11) engage of which one (10) engages on the mechanical coupling and the other (11) engages on the backrest folding device.

7. Adjusting device according to one of more of claims 1 to 6 **characterised in that** a memory device is provided which ensures the head restraint (1) returns to its starting position which it occupied prior to folding forwards.

## Revendications

1. Dispositif de réglage pour un appuie-tête (1) disposé sur un dossier (2) d'un siège de véhicule automomobile et dont la hauteur peut être régulée à l'aide d'un moteur de commande (5) solidaire du dossier, ledit moteur de commande (5) transmettant son mouvement à un élément d'entraînement solidaire de l'appuie-tête, avec un dispositif de déverrouillage du système de pivotement du dossier rabattable,
**caractérisé en ce que**
le moteur de commande (5) peut être désaccouplé de l'élément d'entraînement à l'aide d'un dispositif de déverrouillage du système de pivotement du dossier et l'appuie-tête étant précontraint par un ressort de traction (4) qui le tire vers le bas après que le déverrouillage du dispositif de pivotement du dossier rabattable ait été effectué.

2. Dispositif de réglage selon la revendication 1,
**caractérisé en ce que**
le moteur de commande (5) présente un pignon d'attaque (7) qui entre en prise avec une crémaillère (8) qui est solidaire de l'appuie-tête.

3. Dispositif de réglage selon la revendication 1 ou 2,
**caractérisé en ce que**
l'appuie-tête (1) présente deux tiges de guidage (1a; 1b) parallèles l'une à l'autre et montées dans des douilles de guidage (2a; 2b) solidaires du dossier, lesdites tiges de guidage étant reliées ensemble par une pièce transversale (3) qui est équipée d'une crémaillère (8), disposée parallélément par rapport aux barres de guidage, et est attaquée par le ressort (4).

4. Dispositif de réglage selon l'une des revendications 1 à 3,
**caractérisé en ce que**
le ressort (4) est un ressort de traction.

5. Dispositif de réglage selon l'une ou plusieurs des revendications 1 à 4,
**caractérisé en ce que**
un accouplement mécanique (6) pour mise en prise et hors de prise (6) est disposé entre le pignon d'attaque et le moteur de commande.

6. Dispositif de réglage selon l'une ou plusieurs des revendications 1 à 5,
**caractérisé en ce que**
le dispositif de déverrouillage du système de pivotement du dossier rabattable est un levier pivotant (9) qui est soumis à l'action de deux câbles de traction (10; 11) dont l'un (10) attaque le mécanisme d'accouplement tandis que l'autre (11) agit sur le dispositif de pivotement du dossier rabattable.

7. Dispositif de réglage selon l'une ou plusieurs des revendications 1 à 6,
**caractérisé en ce que**,
pour assurer le retour de l'appuie-tête (1) à la position de départ, réglée avant le rabattement du dossier, un dispositif à mémoire est prévu.
